# EUROPEAN PATENT APPLICATION

(11) **EP 4 588 649 A1**
(43) Date of publication of application: **23.07.2025**
(21) Application number: 23879511.6
(22) Date of filing: 11.09.2023
(51) Int. Cl.: B29D 30/02, B60C 7/00

(54) **METHOD FOR MANUFACTURING NON-PNEUMATIC TIRE**

(30) Priority: 18.10.2022 JP 2022167045
(71) Applicant: BRIDGESTONE CORPORATION, Chuo-ku Tokyo 104-8340 (JP)
(72) Inventor: ABE, Akihiko, Tokyo 104-8340 (JP)
(74) Representative: Marks & Clerk LLP
(86) International application number: PCT/JP2023/033102
(87) International publication number: WO 2024/084861

(57) **Abstract**

A method for manufacturing a non-pneumatic tire that can suppress the separation of the ring member from the tread member is provided. The method for manufacturing a non-pneumatic tire (1) according to this disclosure is a method for manufacturing a non-pneumatic tire (1) that comprises: a ring member (12) formed as a single piece, having an inner cylinder (31), an outer cylinder (32) that surrounds the inner cylinder (31) from an outer side in the tire radial direction, and a connecting member (33) that connects the inner cylinder (31) and the outer cylinder (32); and a tread member (13) in a cylindrical shape, including: inserting the tread member (13) into a cavity (102), moving a movable-side die (130) in a direction of a fixed-side die (110) to close the cavity (102), and supplying molten resin (R) to space on an inner side in the tire radial direction (B) of the tread member (13) and molding the ring member (12), and characterized in that an outer diameter of an outer circumferential surface (tread surface (13a)) of the tread member (13) before molding the ring member (12) is smaller than an inner diameter of an inner circumferential surface (102a) of the cavity (102) that faces the outer circumferential surface.

## Description

### TECHNICAL FIELD

### [Cross-reference to related applications]

This application claims priority based on Japanese Patent Application No. 2022-167045, filed in Japan on October 18, 2022, and the entire contents of which are incorporated herein by reference.

This disclosure relates to a method for manufacturing a non-pneumatic tire.

### BACKGROUND

In recent years, in order to prevent punctures, tires that do not require pressurized air to be filled therein (non-pneumatic tires) have been developed. The non-pneumatic tire disclosed in Patent Document 1 comprises a mounting body attached to the axle; a ring member having an inner cylinder that is mounted on this mounting body and an outer cylinder that surrounds the inner cylinder from the outer side in the tire radial direction; connecting members that are arranged in a plurality of locations between the inner cylinder and the outer cylinder along the tire circumferential direction and that connect the inner cylinder and the outer cylinder so that they can be elastically displaced relative to each other; and a tread member that is arranged around the entire circumference of the outer cylinder.

### CITATION LIST

### Patent Literature

PTL 1: JP 2018-193046 A

### SUMMARY

### (Technical Problem)

In manufacturing the non-pneumatic tire disclosed in Patent Document 1, it is necessary to surface-treat the outer circumferential surface of the resin ring member and apply adhesive, and to fit the tread member to the outer circumferential surface of the ring member. Therefore, jigs and tools are required for each process, and this has been a factor in increasing manufacturing costs.

As a means of simplifying the manufacturing process for a non-pneumatic tire and controlling manufacturing costs, it may be thought of insert-molding the ring member made of resin using the tread member as an insert material.

However, when the ring member made of resin is insert-molded using the tread member as an insert material, the ring member that is formed may shrink to the inner side in the radial direction during the cooling process and separate from the tread member. Therefore, there was room for improvement in this respect.

The object of this disclosure is to provide a method for manufacturing a non-pneumatic tire that can suppress the separation of the ring member from the tread member.

### (Solution to Problem)

In order to solve the above problem, the method for manufacturing a non-pneumatic tire disclosed herein is as follows:
[1] A method for manufacturing a non-pneumatic tire that comprises: a ring member formed as a single piece, consisting of an inner cylinder, an outer cylinder that surrounds the inner cylinder from an outer side in the tire radial direction, and an elastically deformable connecting member that connects the inner cylinder and the outer cylinder each other; and a tread member in a cylindrical shape that is mounted on an outer side in the tire radial direction of the ring member, including: inserting the tread member into a cavity of a molding die, moving a movable-side die in a direction of a fixed-side die to close the cavity, and supplying molten resin to space on an inner side in the tire radial direction of the tread member in the cavity and molding the ring member, wherein an outer diameter of an outer circumferential surface of the tread member before molding the ring member is smaller than an inner diameter of an inner circumferential surface of the cavity that faces the outer circumferential surface.

By adopting such configuration, when pressurized molten resin is supplied into the cavity, the tread surface of the tread member expands outward in the tire radial direction, approaching the inner circumferential surface of the cavity that faces the tread surface. After that, the filled molten resin shrinks when cooled, and the tread member, which had expanded outward in the tire radial direction, restores its original shape while following the shrinkage of the resin. Therefore, it is possible to prevent the separation between the inner circumferential surface of the tread member and the shrunken resin (the ring member).

In addition, in the method for manufacturing a non-pneumatic tire disclosed herein:
[2] It is preferable, in the configuration described in above [1], that a shrinkage rate of the tread member due to cooling of the molten resin is greater than a shrinkage rate of the ring member.

By adopting such configuration, when the molten resin cools, the inner circumferential surface on the inner side in the tire radial direction of the tread member will shrink more than the outer circumferential surface on the outer side in the tire radial direction of the ring member. Therefore, a force acts in the direction that causes the outer circumferential surface of the ring member to adhere to the inner circumferential surface of the tread member 13, and the outer circumferential surface of the ring member 12 can be effectively prevented from separating from the inner circumferential surface of the tread member 13.

In addition, in the method for manufacturing a non-pneumatic tire disclosed herein:
[3] It is preferable, in the configuration described in above [1] or [2], that before molding the ring member, a radial position of an inner circumferential surface of the tread member at an end portion in the tire width direction thereof is the same as a radial position of an outermost end in the tire radial direction of an insert component of the molding die that is used to form the connecting member, at the end portion in the tire width direction.

By adopting such configuration, the inner circumferential surface of the tread member is supported over the circumference in the circumferential direction by the insert components of the molding die, thus, it is difficult for the tread member to shift position due to the supply of molten resin, and the ring member can be insert-molded stably.

In addition, in the method for manufacturing a non-pneumatic tire disclosed herein:
[4] It is preferable, in the configuration described in any one of above [1] to [3], that a width of the tread member in the tire width direction before molding the ring member is greater than a length of the cavity in the molding die in the tire width direction.

By adopting such configuration, the area between the two end portions in the tire width direction of the tread member and the cavity is effectively sealed. Therefore, it is possible to effectively prevent molten resin from leaking out through the two end portions in the tire width direction of the tread member outward in the tire radial direction.

In addition, in the method for manufacturing a non-pneumatic tire disclosed herein:
[5] It is preferable, in the configuration described in any one of above [1] to [4], that the insert component of the molding die extends from one split mold to the other split mold of the molding die, and has a draft angle in which a tip-end portion of the insert component is configured narrower than a base-end portion of the same.

By adopting such configuration, it is possible to prevent the insert components from colliding with the inner circumferential surface of the tread member when clamping the molding die.

In addition, in the method for manufacturing a non-pneumatic tire disclosed herein:
[6] It is preferable, in the configuration described in any one of above [1] to [5], that the molding die has a mating groove that accepts a protrusion provided at the end portion in the tire width direction of the tread member.

By adopting this configuration, the sealability between the end portions in the tire width direction of the tread member and the cavity is further improved, and the leakage of molten resin toward the outer side in the tire radial direction can be effectively suppressed. In addition, by making the protrusion protrude in the tire width direction slightly beyond the ring member formed of the molten resin, it is possible to prevent the resin ring member from directly colliding with other objects and being damaged or scratched.

### (Advantageous Effect)

According to the present disclosure, it is possible to provide a method for manufacturing a non-pneumatic tire that can suppress the separation of the ring member from the tread member.

### BRIEF DESCRIPTION OF THE DRAWINGS

In the accompanying drawings:
FIG. 1A is a side view of a non-pneumatic tire manufactured using a method for manufacturing a non-pneumatic tire in accordance with one embodiment of the present disclosure;
FIG. 1B is an enlarged view of the cross-section I-I area in Figure 1A;
FIG. 2 is a front cross-sectional view of a molding die used in the method for manufacturing a non-pneumatic tire in accordance with one embodiment of the present disclosure;
FIG. 3 is a perspective view of insert components of the molding die used in the method for manufacturing a non-pneumatic tire in accordance with one embodiment of the present disclosure;
FIG. 4 is a flowchart providing the implementation procedure for the method for manufacturing a non-pneumatic tire in accordance with one embodiment of the present disclosure;
FIG. 5 is a front cross-sectional view illustrating a state in which the molding die, used in the method for manufacturing a non-pneumatic tire in accordance with one embodiment of the present disclosure, is being clamped;
FIG 6 is a front cross-sectional view illustrating a state in which the filling of the resin to the molding die, used in the method for manufacturing a non-pneumatic tire in accordance with one embodiment of the present disclosure, has started;
FIG. 7 is a front cross-sectional view illustrating a state in which the filling of the resin to the molding die, used in the method for manufacturing a non-pneumatic tire in accordance with one embodiment of the present disclosure, has completed;
FIG 8 is an enlarged cross-sectional view illustrating a modified example of the tread member and the molding die.

### DETAILED DESCRIPTION

Hereinafter, a method for manufacturing a non-pneumatic tire according to the present disclosure will be described with reference to the drawings. The same components and parts are designated by the same reference numerals/symbols in each drawing.

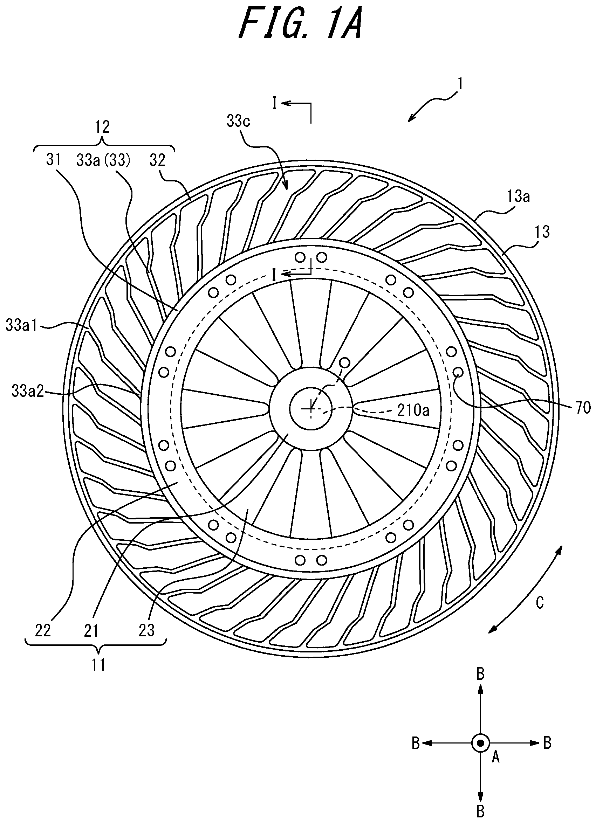

Figure 1A is a side view of a non-pneumatic tire 1 manufactured using a method for manufacturing a non-pneumatic tire in accordance with one embodiment of the present disclosure.

As illustrated in Figure 1A, the non-pneumatic tire 1 comprises a ring member 12 mounted on the outer side in the tire radial direction B of a mounting body 11 which is to be attached to an axle 210a, and a cylindrical tread member 13 mounted on the outer side in the tire radial direction B of this ring member 12. The non-pneumatic tire 1 of this embodiment is a so-called bottom-load type non-pneumatic tire 1 that mainly supports the load with the ring member 12 below the axle 210a.

The mounting body 11 comprises a mounting cylindrical portion 21 in a cylindrical shape onto which a tip-end portion of the axle 210a is mounted; an outer circumferential cylindrical portion 22 in a cylindrical shape that surrounds the mounting cylindrical portion 21 from the outer side in the tire radial direction B; and a plurality of ribs 23 that connect the mounting cylindrical portion 21 and the outer circumferential cylindrical portion 22. The outer circumferential cylindrical portion 22 partitions a circumferential groove extending around the entire circumference in the tire circumferential direction C on the outer circumferential surface on the outer side in the tire radial direction B thereof. By comprising the mounting body 11, the ring member 12, which includes an inner cylinder 31, an outer cylinder 32, and a connecting member 33, can be easily attached to the axle 210a.

The ring member 12 comprises the inner cylinder 31, the outer cylinder 32 that surrounds the inner cylinder 31 from the outer side in the tire radial direction B, and the elastically deformable connecting member 33 that connects the inner cylinder 31 and the outer cylinder 32 each other.

Here, the mounting cylindrical portion 21, the outer circumferential cylindrical portion 22, the inner cylinder 31, the outer cylinder 32, and the tread member 13 are arranged so that their respective central axes are coaxial (to have a common central axis line O). The mounting cylindrical portion 21, the outer circumferential cylindrical portion 22, the inner cylinder 31, the outer cylinder 32, and the tread member 13 are arranged so that their centers in the tire width direction A coincide with each other.

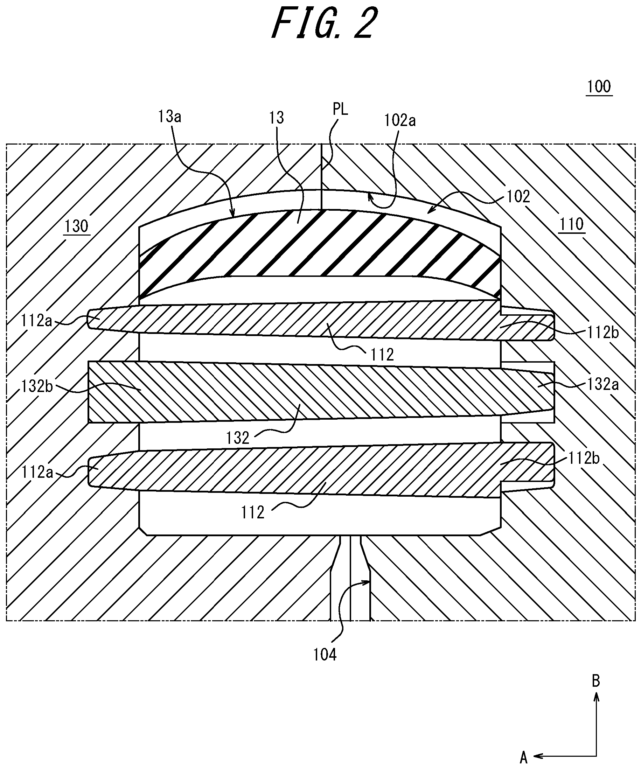

The mounting cylindrical portion 21, the outer circumferential cylindrical portion 22, and the ribs 23 of the mounting body 11 are formed as a single piece from a metal material such as aluminum alloy or a resin material such as polypropylene. The plurality of ribs 23 are arranged so that they are symmetrical about the central axis O, as illustrated in the side view in Figure 2.

In the ring member 12, the outer cylinder 32 is larger, that is wider, than the inner cylinder 31 in the tire width direction A.

The connecting member 33 is composed of a plurality of connecting plate portions 33a arranged along the tire circumferential direction C. The plurality of connecting plate portions 33a are arranged so that they are symmetrical about the central axis O with respect to each other, between the inner cylinder 31 and the outer cylinder 32 of the ring member 12. In addition, each connecting plate portion 33a in this embodiment has the same size and shape. Furthermore, the width of each connecting plate portion 33a in the tire width direction A is smaller than the width of the outer cylinder 32 in the tire width direction A.

The connected plate portions 33a that are adjacent to each other in the tire circumferential direction C are arranged with no contact between them.

In each connecting plate portion 33a, the outer end portion 33a1 on the outer side in the tire radial direction B, which is connected to the outer cylinder 32, is located on one side in the tire circumferential direction C, compared to the inner end portion 33a2 on the inner side in the tire radial direction B, which is connected to the inner cylinder 31. In other words, the outer end portion 33a1 and the inner end portion 33a2 are arranged at different positions in the tire circumferential direction C. In this way, the connecting plate portion 33a can be used as a plate spring that is easily elastically deformed in the tire radial direction B.

In this embodiment, the inner cylinder 31, the outer cylinder 32, and the connecting member 33 are made of resin. This makes it possible to reduce the weight of the inner cylinder 31, the outer cylinder 32, and the connecting member 33. In this embodiment, the inner cylinder 31, the outer cylinder 32 and the connecting member 33 are integrally formed from resin material by insert molding using the tread member 13 as the insert material. In addition, the resin material may be, for example, a mixture containing only one type of resin material, a mixture containing two or more types of resin material, or a mixture containing one or more types of resin material and one or more types of elastomer. In addition, it may contain additives such as anti-aging agents, plasticizers, fillers, or pigments. The resin material is preferably a thermoplastic resin.

As the resin material, specifically, thermoplastic resins such as polyester and nylon, thermosetting resins such as vinyl ester resin and unsaturated polyester resin, and other synthetic resins can be used. The resin material can also contain fibers such as glass, carbon, graphite, aramid, polyethylene, and ceramic as reinforcing fibers.

The ring member 12 in this embodiment is composed of the inner cylinder 31, the outer cylinder 32, and the connecting members 33 described above, however, it may also be a ring member with other parts.

By having the inner cylinder 31 of the ring member 12 housed in the circumferential groove partitioned on the outer circumferential surface on the outer side in the tire radial direction B of the outer circumferential cylindrical portion 22 of the mounting body 11, the ring member 12 is restricted in its relative movement in the tire width direction A with respect to the mounting body 11. In addition, the ring member 12 is restricted in its relative movement in the tire width direction A with respect to the mounting body 11 by jointing the inner cylinder 31 of the ring member 12 and the outer circumferential cylindrical portion 22 of the mounting body 11 together using a bolt 70. In this way, the ring member 12 of this embodiment is fixed to the mounting body 11, however, the fixing of the mounting body 11 and the ring member 12 is not limited to the fixing means described above. The relative movement of the mounting body 11 and the ring member 12 in the tire circumferential direction C may be restricted, for example, by fitting a protrusion and a recess, which are provided on one and the other of the outer circumferential surface of the outer circumferential cylindrical portion 22 of the mounting body 11 and the inner circumferential surface of the inner cylinder 31.

The tread member 13 is formed into a cylindrical shape and covers the entire outer circumferential surface side of the outer cylinder 32 of the ring member 12. The outer circumferential surface of the tread member 13 configures the tread surface 13a of the non-pneumatic tire 1. In this embodiment, the tread member 13 is formed, for example, of vulcanized rubber obtained by vulcanizing a rubber composition containing natural rubber, etc., or thermoplastic materials, etc. Examples of the thermoplastic materials include thermoplastic elastomers and thermoplastic resins. Examples of the thermoplastic elastomers include amide-based thermoplastic elastomers (TPA), ester-based thermoplastic elastomers (TPC), olefin-based thermoplastic elastomers (TPO), styrene-based thermoplastic elastomers (TPS), urethane-based thermoplastic elastomers (TPU), thermoplastic vulcanizates (TPV), and other thermoplastic elastomers (TPZ), as specified in JIS K 6418. Examples of thermoplastic resins include urethane resin, olefin resin, polyvinyl chloride resin, and polyamide resin.

From the perspective of wear resistance, it is preferable to form the tread member 13 of vulcanized rubber.

Next, a molding die 100 which is used in the method for manufacturing the non-pneumatic tire 1 according to this embodiment will be described.

As illustrated in Figure 2, the molding die 100 is divided into two parts by the parting line PL, and comprises a fixed-side die 110 on the right side in the figure and a movable-side die 130 that can be moved in the left-right direction in the figure relative to the fixed side die 110. Figure 2 illustrates a state in which the fixed-side die 110 and the movable-side die 130 are in contact with each other at the parting line PL and clamped together.

The tread member 13 is arranged in a cavity 102 which is formed by the fixed-side die 110 and the movable-side die 130. The tread member 13 is placed in the cavity 102 by the person carrying out this manufacturing method before the molding die 100 is closed. The width of the tread member 13 in the tire width direction A before insert molding is configured to be larger than the width of the cavity 102 in the tire width direction A of the molding die 100 after clamping, as described later. In other words, as illustrated in Figure 1A, in a state when the tread member 13 is placed in the cavity 102 and the mold is clamped, the tread member 13 is compressed in the tire width direction A by the mold 100. This prevents the molten resin R supplied into the cavity 102 through a gate 104 from leaking out upwards from the gap between the two end portions in the tire width direction A of the tread member 13 and the cavity 102.

In Figure 2, a fixed-side insert component 112 that is used to form the connecting member 33 is provided projecting from the fixed-side die 110 toward the movable-side die 130 (to the left side in Figure 1A). Similarly, a movable-side insert component 132 that is used to form the connecting member 33 is provided projecting from the movable-side die 130 toward the fixed-side die 110 (to the right side in Figure 1A). In the illustrated example in the drawing, the movable-side insert component 132 is positioned between the two fixed-side insert components 112 in the radial direction. The fixed-side insert component 112 and the movable-side insert component 132 form the opening 33c between the connecting members 33 adjacent in the circumferential direction of the non-pneumatic tire 1 illustrated in Figure 1A.

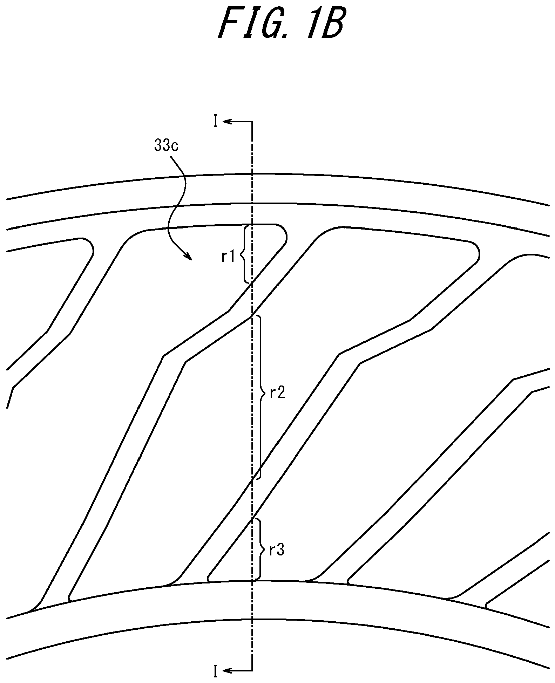

The arrangement of the fixed-side insert components 112 and the movable-side insert component 132 in the cross-sectional view of the molding die 100 in Figure 2 corresponds to the I-I cross-section of the non-pneumatic tire 1 in Figures 1A and 1B. That is, the height of the fixed-side insert component 112 on the outer side in the tire radial direction B (the upper side in Figure 2) corresponds to the radial length r1 on the I-I cross-section in Figure 1B. Similarly, the height of the movable-side insert component 132 in the tire radial direction B in Figure 2 corresponds to the radial length r2 on the I-I cross-section in Figure 1B. In addition, the height of the fixed-side insert component 112 on the inner side in the tire radial direction B (the lower side in Figure 2) corresponds to the radial length r3 on the I-I cross-section in Figure 1B.

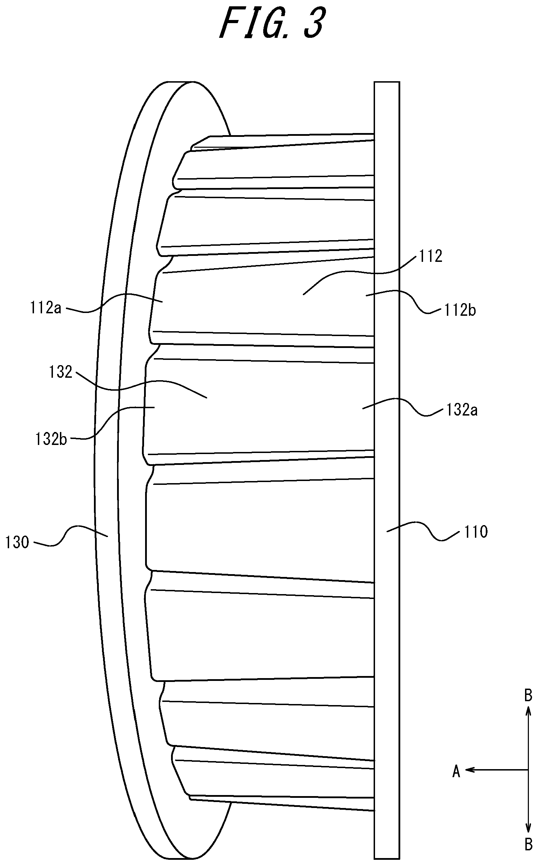

As illustrated in Figures 2 and 3, the fixed-side insert component 112 has a draft angle that decreases in height in the tire radial direction B and width in the tire circumferential direction C from the base-end portion 112b toward the tip-end portion 112a. This configuration makes it easier to release the non-pneumatic tire 1 from the molding die 100 when opening the mold. In addition, it is possible to prevent the insert components from colliding with the inner circumferential surface of the tread component 13 when clamping the molding die 100.

Due to the draft angle, in a state before the ring member 12 is insert-molded, the position in the tire radial direction B of the inner circumferential surface of the tread member 13 at the end portion in the tire width direction A thereof is the same as the position in the tire radial direction B of the outermost end in the radial direction of the fixed-side insert component 112 that is used to form the connecting member 33 (the base portion where the position in the tire radial direction B is the furthest from the center) at the end portion in the tire width direction A.

In other words, in a state before the ring member 12 is insert-molded, the inner circumferential surface of the end portion on the side of the fixed-side die 110 of the tread member 13 is in contact with the thickest base-end portion 112b of the fixed-side insert component 112. With this configuration, in a state before the ring component 12 is insert-molded, the tread component 13 is held in place by the fixed-side insert component 112, therefore, it is difficult for the tread component 13 to shift its position, due to the supply of molten resin R in the subsequent process, and the ring component 12 can be insert-molded stably.

As illustrated in Figure 3, the fixed-side insert component 112 and the movable-side insert component 132 are arranged alternately in the circumferential direction, so that, in the state before the ring member 12 is insert-molded, the tread member 13 is supported alternately in the circumferential direction by the base-end portion 112b of the fixed-side insert component 112 and the base-end portion 132b of the movable-side insert component 132.

As illustrated in Figure 2, in a state before the ring member 12 is insert-molded, the outer diameter of the outer circumferential surface (the tread surface 13a) of the tread member 13 is configured to be smaller than the inner diameter of the inner circumferential surface 102a of the cavity 102 that faces the outer circumferential surface. With this configuration, as described later, when the pressurized molten resin R is supplied into the cavity 102 via the gate 104, the tread surface 13a of the tread member 13 expands outward in the tire radial direction B, approaching the inner circumferential surface 102a of the cavity 102 that faces the tread surface 13a. After that, the filled molten resin R shrinks when cooled, and the tread member 13, which had expanded outward in the tire radial direction B, restores its original shape while following the shrinkage of the resin. Therefore, it is possible to prevent the separation between the inner circumferential surface of the tread member 13 and the shrunken resin (the ring member 12).

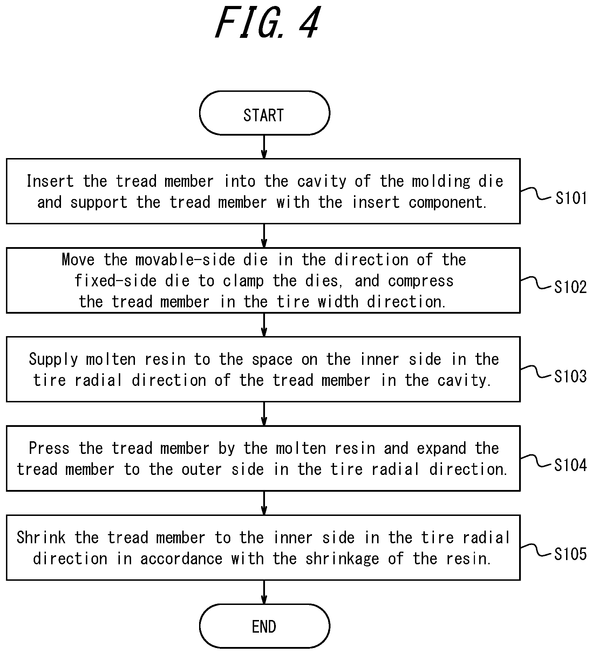

When using the molding die 100 comprising the configuration illustrated in Figures 2 and 3 to manufacture the non-pneumatic tire 1 in accordance with this embodiment, first the tread member 13 is inserted into the cavity 102 of the molding die 100 (Step S101 in Figure 4). To insert the tread member 13 into the molding die 100, the movable-side die 130 is moved to the left side in Figure 2 to open the cavity 102, and the tread member 13 is inserted into the cavity 102 of either the fixed-side die 110 or the movable-side die 130. As mentioned above, the end portion in the tire width direction A on the inner circumferential surface of the tread member 13 is supported by the base-end portion 112b of the fixed-side insert component 112 or the base-end portion 132b of the movable-side insert component 132, therefore, it is held stably within the fixed-side die 110 or the movable-side die 130 in a state where the molding die 100 is open.

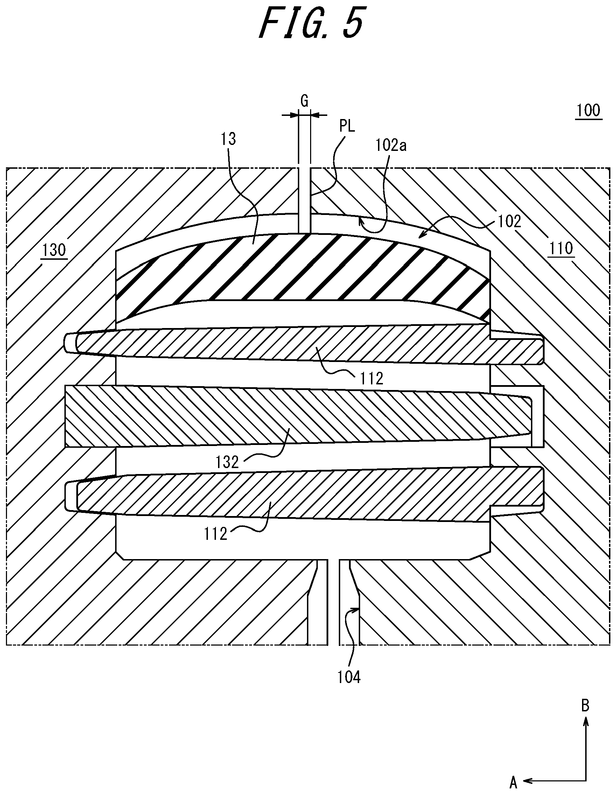

Next, the movable-side die 130 is moved in the direction of the fixed-side die 110 to clamp the molding dies, and the tread member 13 is compressed in the tire width direction A (step S102 in Figure 4). As mentioned above, the width of the tread member 13 in the tire width direction A before molding the ring member 12 is formed to be larger than the length of the cavity 102 in the tire width direction A of the molding die 100. Therefore, as illustrated in Figure 5, when the fixed-side die 110 and the movable-side die 130 are separated by a gap G, the ends of the tread member 13 in the tire width direction A come into contact with the ends of the cavity 102 of the molding die 100 in the tire width direction A. By moving the movable-side die 130 even closer to the fixed-side die 110 from the state illustrated in Figure 5, the tread member 13 is compressed by the two ends of the cavity 102 in the tire width direction A, and the space between the two ends of the tread member 13 in the tire width direction A and the cavity 102 is sealed (Figure 2). In this embodiment, as illustrated in Figure 5, the parting line PL passes along the axis of the gate 104 which is used to supply the molten resin R into the cavity 102.

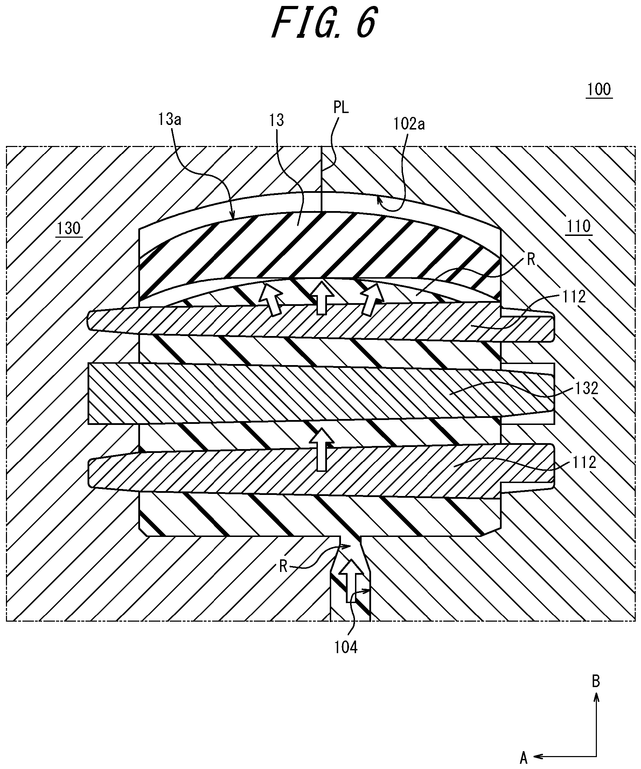

Next, molten resin R is supplied into the space on radially inner side of the tread member 13 in the cavity 102 (step S103 in Figure 4). The molten resin R is supplied into the cavity 102 through the gate 140, which is located on the inner side in the tire radial direction B of the cavity 102, as illustrated in Figure 6. The supplied molten resin R is first supplied into the space corresponding to the inner cylinder 31 (see Figure 1A), that is the space on the inner side in the tire radial direction B of the fixed-side insert component 112 which is the one on the inner side in the tire radial direction B (lower side in the figure) in Figure 6. Next, the molten resin R is supplied in the direction of the arrow in Figure 6 (toward the outer side in the tire radial direction B, toward the top direction in Figure 6), and molten resin R is supplied into the space corresponding to the connecting member 33 in Figure 1A. Finally, the molten resin R is supplied into the space facing the inner circumferential surface of the tread member 13, corresponding to the outer cylinder 32 in Figure 1A.

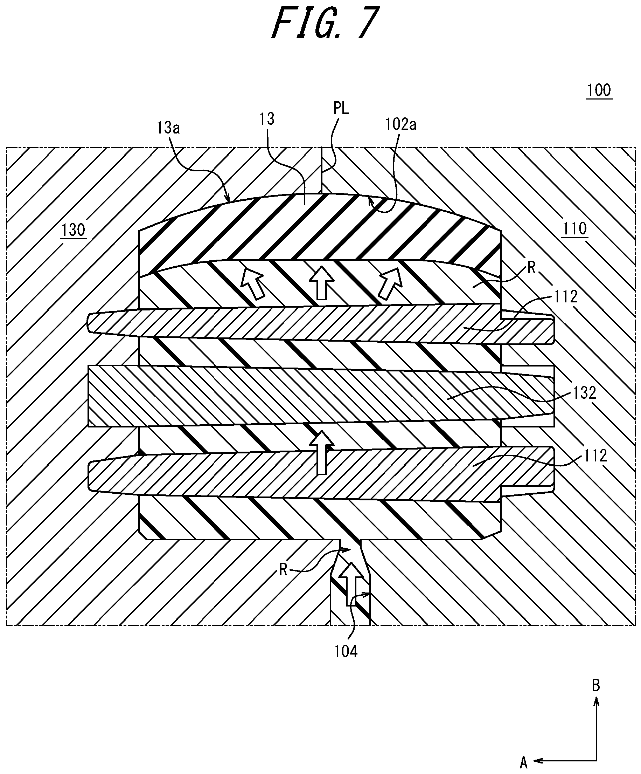

When the molten resin R is filled in the space facing the inner circumferential surface of the tread member 13 in the cavity 102, as illustrated in Figure 7, the tread member 13 is pressurized by the molten resin R and expanded outward in the tire radial direction B (step S104 in Figure 4). The tread member 13 is expanded until the tread surface 13a comes into contact with the inner circumferential surface 102a in the cavity 102, and further pressure of the molten resin R causes compressive strain in the tire radial direction B. As a result of this, strain occurs that extends the tread member 13 also in the tire width direction A, thus, the end portions of the tread member 13 and the end portions of the cavity 102 are more firmly adhered to each other in the tire width direction A, and the sealability between them is improved. Therefore, it is possible to effectively prevent the molten resin R from leaking out through the two end portions in the tire width direction A of the tread member 13 outward in the tire radial direction B.

When the filling of the pressurized molten resin R into the cavity 102 is completed by step S104, the supply of the molten resin R from the gate 104 is stopped and the molten resin R in the cavity 102 is cooled. In the process of cooling the molten resin R, the pressure inside the cavity 102 decreases, and the molten resin R shrinks based on the material's inherent molding shrinkage rate. The cooled resin in the cavity 102 shrinks towards the inner side in the tire radial direction B, however, because the resin pressure in the cavity 102 is decreasing, the tread member 13, which had expanded outward in the tire radial direction B in step S104, returns to its original shape before the molten resin R was supplied. The tread member 13 shrinks in the same way as the cooled resin, toward the inner side in the tire radial direction B.

In particular, in this embodiment, the shrinkage rate of the tread member 13 due to the cooling of the molten resin R is configured to be greater than the shrinkage rate of the molten resin R (the ring member 12) provided on radially inner side of the tread member 13. Here, the shrinkage rate of the tread member 13 is the decrease in the diameter of the inner circumferential surface of the tread member 13 in a state where the tread member 13 is inserted into the molding die 100, compared to the diameter of the inner circumferential surface of the tread member 13 in a state where the tread member 13 is expanded outward in the tire radial direction B by supplying the pressurized molten resin R (in the state in Figure 7). In addition, the shrinkage rate of the molten resin R (the ring member 12) provided on the radially inner side of the tread member 13 is the decrease in the diameter of the outer circumferential surface of the molten resin R (the ring member 12) in the state where the molten resin R is cooled, compared to the diameter of the outer circumferential surface of the molten resin R (the ring member 12) in a state where the pressurized molten resin R is supplied (in the state in Figure 7).

In this way, in this embodiment, the shrinkage rate of the tread member 13 due to the cooling of the molten resin R is configured to be greater than the shrinkage rate of the molten resin R (the ring member 12) provided on the radially inner side of the tread member 13. With this configuration, when the molten resin R is cooling, the inner circumferential surface on the inner side in the tire radial direction B of the tread member 13 will shrink more than the outer circumferential surface on the outer side in the tire radial direction B of the ring member 12. Therefore, the outer circumferential surface of the ring member 12 can be effectively prevented from separating from the inner circumferential surface of the tread member 13.

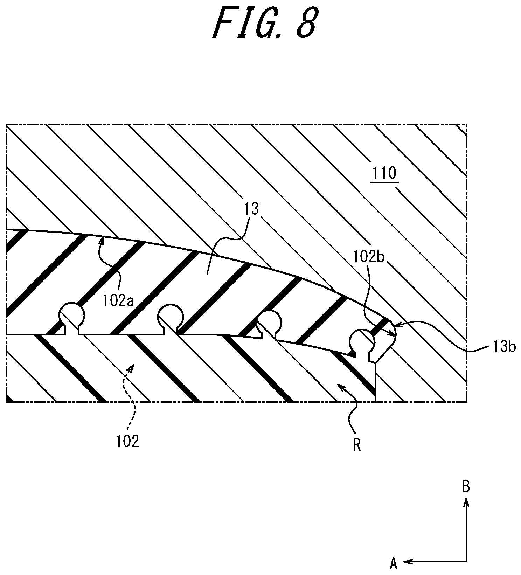

Figure 8 illustrates a modified example of the present embodiment, with an enlarged view illustrating the state, corresponding to Figure 7, in which the molten resin R is filled in the cavity 102. In this modified example, a mating groove 102b is provided to receive a protrusion 13b that protrudes further outward from the end portion in the tire width direction A of the tread member 13. This configuration further improves the sealability between the end portion in the tire width direction A of the tread member 13 and the cavity 102, and effectively prevents the molten resin R from leaking out outward in the tire radial direction B. In addition, by making the protrusion 13b protrude in the tire width direction A slightly beyond the ring member 12 formed of the molten resin R, it is possible to prevent the resin ring member 12 from directly colliding with other objects and being damaged or scratched.

As mentioned so far, this embodiment is a method for manufacturing a non-pneumatic tire 1 that comprises: the ring member 12 formed as a single piece, consisting of the inner cylinder 31, the outer cylinder 32 that surrounds the inner cylinder 31 from the outer side in the tire radial direction B, and the elastically deformable connecting member 33 that connects the inner cylinder 31 and the outer cylinder 32 each other; and the tread member 13 in a cylindrical shape that is mounted on the outer side in the tire radial direction of the ring member 12, including: inserting the tread member 13 into the cavity 102 of the molding die 100, moving the movable-side die 130 in the direction of the fixed-side die 110 to close the cavity 102, and supplying molten resin R to space on the inner side in the tire radial direction of the tread member 13 in the cavity 102 and molding the ring member 12, wherein the outer diameter of the outer circumferential surface (the tread surface 13a) of the tread member 13 before molding the ring member 12 is configured to be smaller than the inner diameter of the inner circumferential surface of the cavity 102 that faces the outer circumferential surface. By adopting such configuration, when pressurized molten resin R is supplied into the cavity 102, the tread surface 13a of the tread member 13 expands outward in the tire radial direction B, approaching the inner circumferential surface 102a of the cavity 102 that faces the tread surface 13a. After that, the filled molten resin R shrinks when cooled, and the tread member 13, which had expanded outward in the tire radial direction B, restores its original shape while following the shrinkage of the resin. Therefore, it is possible to prevent the separation between the inner circumferential surface of the tread member 13 and the shrunken resin (the ring member 12).

In addition, in this embodiment, the shrinkage rate of the tread member 13 due to cooling of the molten resin R is configured to be greater than the shrinkage rate of the ring member 12. By adopting such configuration, when the molten resin R cools, the inner circumferential surface on the inner side in the tire radial direction of the tread member 13 B will shrink more than the outer circumferential surface on the outer side in the tire radial direction B of the ring member 12. Therefore, since a force acts in the direction that causes the outer circumferential surface of the ring member 12 to adhere to the inner circumferential surface of the tread member 13, the outer circumferential surface of the ring member 12 can be effectively prevented from separating from the inner circumferential surface of the tread member 13. In this embodiment, the outer circumferential surface of the ring member 12 is prevented from separating from the inner circumferential surface of the tread member 13 by changing the shrinkage rates of the tread member 13 and the ring member 12, however, the present disclosure is not limited to this embodiment. The separation between the tread member 13 and the ring member 12 may actively be prevented by using adhesives or other methods, such as bonding resin with surface treatment and vulcanized rubber with surface treatment without using adhesives.

In addition, in this embodiment, before molding the ring member 12, the radial position of the inner circumferential surface of the tread member 13 at the end portion in the tire width direction A thereof is configured to be the same as the radial position of the outermost end in the tire radial direction B of the insert component (the fixed-side insert component 112 and the movable-side insert component 132) of the molding die 100 that is used to form the connecting member 33, at the end portion in the tire width direction. By adopting this configuration, the inner circumferential surface of the tread member 13 is supported over entire circumference in the circumferential direction by the insert components of the molding die 100, thus, it is difficult for the tread member 13 to shift position due to the supply of molten resin R, and the ring member 12 can be insert-molded stably.

In addition, in this embodiment, the width of the tread member 13 in the tire width direction A before molding the ring member 12 is configured to be greater than the length of the cavity 102 in the molding die 100 in the tire width direction A. By adopting this configuration, the area between the two end portions in the tire width direction A of the tread member 13 and the cavity 102 is effectively sealed. Therefore, it is possible to effectively prevent the molten resin R from leaking out through the both end portions in the tire width direction A of the tread member 13 outwards in the tire radial direction B.

In addition, in this embodiment, the insert component (the fixed-side insert component 112 and the movable-side insert component 132) of the molding die 100 is configured to extend from one split mold to the other split mold of the molding die, and has a draft angle in which a tip-end portion of the insert component is configured narrower than a base-end portion of the same. By adopting this configuration, it is possible to prevent the insert components from colliding with the inner circumferential surface of the tread member 13 when clamping the molding die 100.

In addition, in this embodiment, the molding die 100 is configured to have the mating groove 102b that accepts the protrusion 13b provided at the end portion in the tire width direction of the tread member 13. By adopting this configuration, the sealability between the end portions in the tire width direction A of the tread member 13 and the cavity 102 is further improved, and the leakage of molten resin R toward the outside in the tire radial direction B can be effectively suppressed. In addition, by making the protrusion 13b protrude in the tire width direction A slightly beyond the ring member 12 formed of the molten resin R, it is possible to prevent the resin ring member 12 from directly colliding with other objects and being damaged or scratched.

Although this disclosure has been explained based on various drawings and embodiments, it should be noted that a person skilled in the art would be able to make various modifications and alterations based on this disclosure. Therefore, it should be noted that these modifications and alterations are included within the scope of the present disclosure. For example, the components or functions included in each embodiment can be rearranged so that they do not contradict logically. In addition, the configurations or functions included in each embodiment can be used in combination with other embodiments, and it is possible to combine multiple configurations or functions into one, divide them, or omit some of them.

For example, this embodiment is intended for use in the manufacture of bottom-load type non-pneumatic tires 1, but it is not limited to this aspect and can also be used in the manufacture of top-load type non-pneumatic tires 1.

### INDUSTRIAL APPLICABILITY

This disclosure relates to a method for manufacturing a non-pneumatic tire 1 that can suppress the separation of the ring member 12 from the tread member 13.

### REFERENCE SIGNS LIST

- 1: Non-pneumatic tire
- 11: Mounting body
- 12: Ring member
- 13: Tread member
- 13a: Tread surface
- 13b: Protrusion
- 21: Mounting cylindrical portion
- 22: Outer circumferential cylindrical portion
- 23: Rib
- 31: Inner cylinder
- 32: Outer cylinder
- 33: Connecting member
- 33a: Connecting plate portion
- 33a1: Outer end portion
- 33a2: Inner end portion
- 33c: Opening
- 70: Bolt
- 100: Molding die
- 102: Cavity
- 102a: Inner circumferential surface
- 102b: Mating groove
- 104: Gate
- 110: Fixed-side die
- 112: Fixed-side insert component
- 112a: Tip-end portion
- 112b: Base-end portion
- 130: Movable-side die
- 132: Movable-side insert component
- 132a: Tip-end portion
- 132b: Base-end portion
- 140: Gate
- 210a: Axle
- A: Tire width direction
- B: Tire radial direction
- C: Tire circumferential direction
- G: Gap
- O: Center axis
- PL: Parting line
- R: Molten resin
- r1, r2, r3: Radial length

## Claims

1. A method for manufacturing a non-pneumatic tire that comprises:
a ring member formed as a single piece, consisting of an inner cylinder, an outer cylinder that surrounds the inner cylinder from an outer side in the tire radial direction, and an elastically deformable connecting member that connects the inner cylinder and the outer cylinder each other; and
a tread member in a cylindrical shape that is mounted on an outer side in the tire radial direction of the ring member, including:
inserting the tread member into a cavity of a molding die,
moving a movable-side die in a direction of a fixed-side die to close the cavity, and
supplying molten resin to space on an inner side in the tire radial direction of the tread member in the cavity and molding the ring member, wherein
an outer diameter of an outer circumferential surface of the tread member before molding the ring member is smaller than an inner diameter of an inner circumferential surface of the cavity that faces the outer circumferential surface.

2. The method for manufacturing a non-pneumatic tire as described in claim 1, wherein a shrinkage rate of the tread member due to cooling of the molten resin is greater than a shrinkage rate of the ring member.

3. The method for manufacturing a non-pneumatic tire as described in claim 1 or 2, wherein before molding the ring member, a radial position of an inner circumferential surface of the tread member at an end portion in the tire width direction thereof is the same as a radial position of an outermost end in the tire radial direction of an insert component of the molding die that is used to form the connecting member, at the end portion in the tire width direction.

4. The method for manufacturing a non-pneumatic tire as described in claim 1 or 2, wherein a width of the tread member in the tire width direction before molding the ring member is greater than a length of the cavity in the molding die in the tire width direction.

5. The method for manufacturing a non-pneumatic tire as described in claim 1 or 2, wherein the insert component of the molding die extends from one split mold to the other split mold of the molding die, and has a draft angle in which a tip-end portion of the insert component is configured narrower than a base-end portion of the same.

6. The method for manufacturing a non-pneumatic tire as described in claim 1 or 2, wherein the molding die has a mating groove that accepts a protrusion provided at the end portion in the tire width direction of the tread member.
